**Europäisches Patentamt**

(19) **European Patent Office**

**Office européen des brevets**

(11) Publication number: **0 127 263**
**B1**

(12) **EUROPEAN PATENT SPECIFICATION**

(45) Date of publication of patent specification: **27.09.89**

(51) Int. Cl.⁴: **G 01 B 7/00, G 01 B 7/28**

(21) Application number: **84301307.9**

(22) Date of filing: **29.02.84**

(54) Measurement of surface profile.

(30) Priority: **01.03.83 GB 8305542**

(43) Date of publication of application:
**05.12.84 Bulletin 84/49**

(45) Publication of the grant of the patent:
**27.09.89 Bulletin 89/39**

(84) Designated Contracting States:
**AT BE DE FR IT LU NL SE**

(56) References cited:
**DE-A-2 258 022**
**DE-A-3 002 667**
**DE-B-2 601 250**
**GB-A-2 132 354**

(73) Proprietor: **British Steel plc**
**9 Albert Embankment**
**London SE1 7SN (GB)**

(72) Inventor: **Moore, Jack Michael**
**9 Channel View Brywcoch**
**Neath West Glamorgan Wales (GB)**
Inventor: **Parker, Dennis John**
**110 Maes-Ty-Canol Baglan**
**Port Talbot West Glamorgan Wales (GB)**

(74) Representative: **Fry, Alan Valentine**
**FRY HEATH & CO. Seloduct House Station Road**
**Redhill Surrey RH1 1NF (GB)**

## Description

·This invention relates to an apparatus for measuring or detecting changes in the surface profile of a rotating workpiece such as a work roll. In particular, but not exclusively, the invention concerns such apparatus for measuring roll surface profile as the roll is rotating and loaded by the passage of hot metal strip.

In the metals industry, increasing emphasis is being placed on the control of the profile and shape of rolled hot metal strip. One important aspect of this control is the geometry of the surface of the work rolls during the rolling process.

In the past, an inductance measuring system across an air gap has been employed to determine roll profile but this system has been found to have the disadvantage of being sensitive to the surface temperature of the roll under inspection which means that discrimination of the variable parameters to be measured is impossible.

DE—A1—3,002,667 discloses a pneumatic position sensor for inspecting the surface of such materials as webs of paper. This sensor includes a nozzle through which compressed gas is directed towards and onto a surface under inspection. The nozzle is mounted on a slide which carries at its end remote from the nozzle a throttle plate or the like. The throttle plate is acted upon by compressed gas to produce an axial force to move the nozzle towards or away from the surface ·to maintain the gap between the nozzle and the surface relatively constant. The movement of the slide is, therefore, dependent upon a pressure differential occurring between that exerted by the compressed gas on the throttle plate and the pressure existing at any given time within the gap between the nozzle and the surface under inspection.

Whereas, a sensor as described in DE—A—3,002,667 may operate effectively in a relatively clean environment at a relatively low air flow rate using instrument quality air supply, it would be incapable of operating to measure the surface profile of a work roll where relatively high gas pressures are required to displace thick water films and the like which are present on the work rolls during operation thereof. Furthermore, the presence in DE—A—3,002,667 of a throttle plate creates a need for venting air to the atmosphere with the consequent possibility of the ingress of water and other debris to the probe interior.

Accordingly, the present invention provides apparatus for measuring or detecting changes in the surface profile of a workpiece, the apparatus comprising a probe mounted for movement relative to the workpiece surface and including an open tip through which gas under pressure can be discharged to form a film or cushion between the probe tip and the adjacent surface of the workpiece, the probe being connected at its end remote from the workpiece surface to the core of a displacement transducer coupled to signal processing equipment, the apparatus being characterised in that one pad or more pads is/are provided which, in use of the apparatus, contact(s) the workpiece surface to provide a repeatable datum position for locating the probe tip relative to the workpiece surface.

Thus, the need for air venting with the consequent possibility of water and other debris contaminating the probe interior, is removed. Reference pads are provided which, in use of the apparatus, contact the workpiece surface to provide a repeatable datum position for locating the probe tip relative to the workpiece surface. Such pads are not disclosed by DE—A—3,002,667 and their presence is advantageous in that a physical datum for repeatably locating the probe tip relative to the workpiece surface is provided.

The workpiece may comprise a work roll whose surface, in use, is covered with a curtain of cooling water. In this embodiment, the gas forming the film cushion is discharged from the probe tip at a force sufficient to penetrate the cooling water curtain and profile measurements are taken while the rolls are loaded by the passage of hot metal strip.

The invention will now be described, by way of example only, with reference to the accompanying diagrammatic drawings, in which:—

Figure 1 is section taken through a profile gauge in accordance with the invention;

Figure 2 is a side elevational view of apparatus in accordance with the invention assembled adjacent the surface of a work roll;

Figure 3 is a perspective view partly in section of the apparatus illustrated in Figure 2; and

Figure 4 schematically illustrates apparatus in accordance with the invention coupled to signal processing equipment.

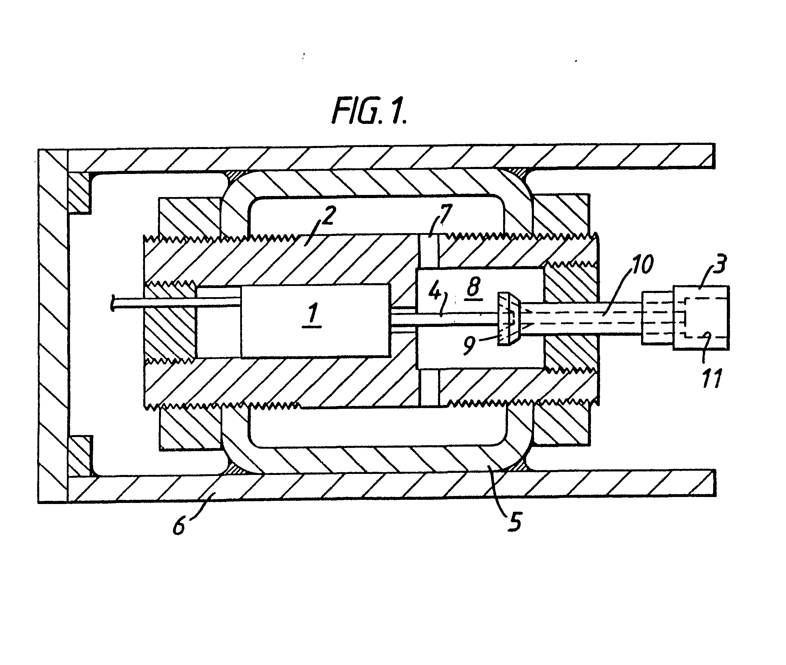

The gauge illustrated in Figure 1 includes an L.V.D.T. transducer 1 mounted within a stainless steel housing 2. The movable core of the transducer is attached through a rod 4 to one end of a movable probe tip 3 supported within a collar screwed into one end of the housing 2. The housing 2 is supported within a substantially square section beam 5 which, in turn, is supported within a steel yoke member 6. The housing 2 is formed with passageways 7 which place a chamber 8 of the housing in communication with the interior of the beam 5 to which compressed air is supplied from an external source (not shown). The probe tip 3 is formed with inclined entry passageways 9 and a central bore 10 which exits into a recess 11 formed in the probe tip end. Preferably, the probe tip is constructed from aluminium.

The transducer is connected through a cable to a supply of electricity and to signal processing equipment.

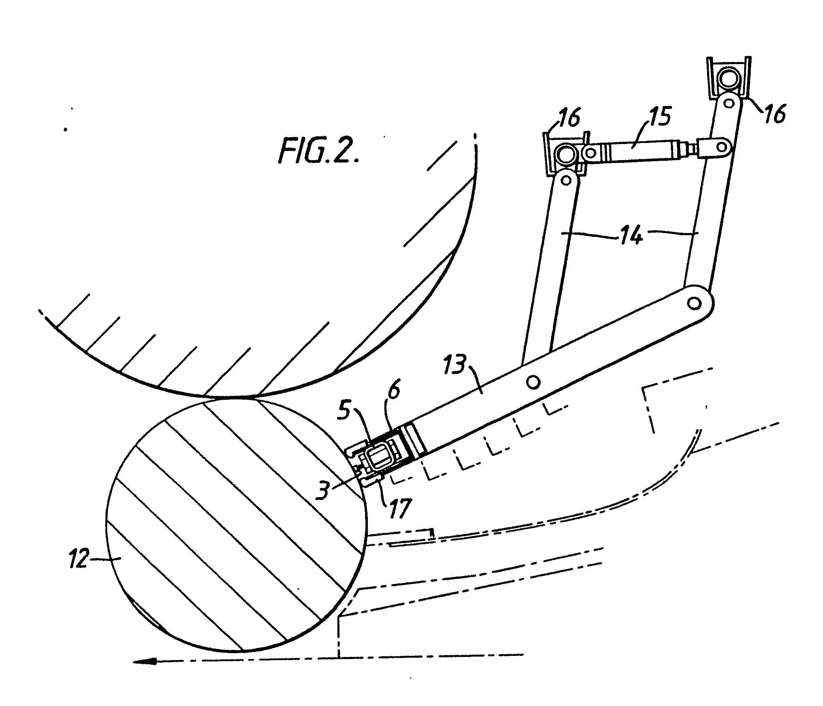

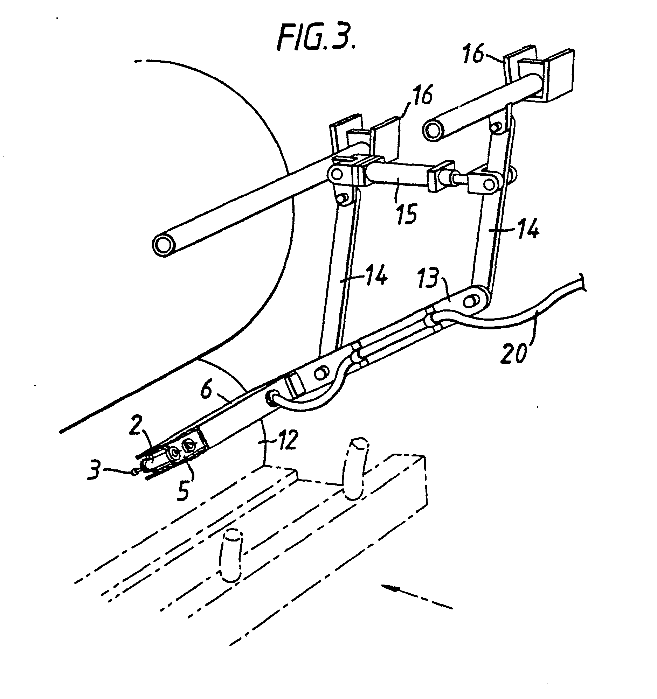

In Figures 2 and 3 of the drawings, the gauge illustrated in Figure 1 is shown located adjacent the surface of a work roll 12 whose profile is to be inspected. As will be apparent from these Figures, several such gauge units are housed side-by-side in the beam 5 across the full width of the roll to enable a complete display of localised wear to be made. The yoke member 6 is supported between inclined arms 13 pivotably connected to link members 14 interconnected through a pneumatic cylinder 15. The ends of the link members 14 remote from the arms 13 are pivotably mounted on fixings 16. Non-metallic pads 17 are located on the ends of the yoke member 6 to provide a repeatable datum position for the probe units. Cooling heads are provided to supply a curtain of cooling water on the surface of the work roll.

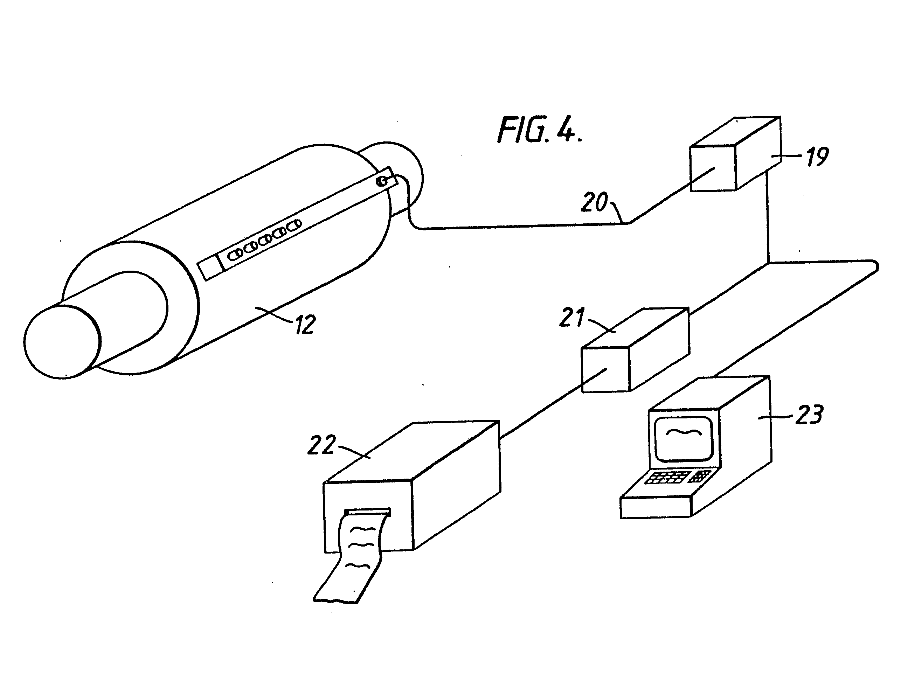

Signal processing equipment for use with the probe units is illustrated in Figure 4. The equipment includes a head amplifier 19 connected to the gauge units through the cable 20, a signal processing unit 21, recorder 22 and microprocessor 23.

In operation of the illustrated apparatus, the beam 5 is positioned adjacent the work roll 12 through operation of the cylinder 15 with the non-metallic pads 17 contacting the work roll surface to provide a repeatable datum position. The pads 17 may be constructed of a material such as nylon and are positioned one at each end of the beam. Compressed air is then passed through the beam 5 and enters the chambers 8 of the individual probe units through the passageways 7 of the housing 2. This compressed air passes into the individual probes through passageways 9 to create a film or cushion between the adjacent surfaces of the probe tip 3 and the work roll 12.

In one specific arrangement, the air pressure employed was 0.7 bar to give an air film thickness of 0.127mm with a measuring accuracy of 0.01mm. The central bore 10 of the probe in this arrangement was 2.4mm to give adequate air flow to maintain the required film thickness without generating an excessive air consumption. Air consumption was estimated at 2.54m$^3$/min. In addition to creating an air film, the gas pressure was sufficient to clean the opposed roll surface of cooling fluid.

Analogue outputs from the individual transducers are scanned at a fast rate as the roll rotates to ensure that the profile relates to a 10° or less sector of the roll. This means that a sample and hold facility is necessary so that the profile of the roll can be scanned quickly. Subsequent processing and display can, however, be carried out more slowly to provide an output for an analogue recorder or recording oscilloscope. Figure 4 shows the breakdown of units required for this facility. The output from the transducers feed directly into the head amplifier unit 19 mounted close to the beam in the vicinity of the mill stand. This output in turn can be fed to a remote sample and hold unit which also contains the multiplexer unit. The output from this processing is then suitable for direct input into the analogue recorder 22 or recording oscilloscope.

The microprocessor 23 has a fast sample and multiplexing facility; the input can be taken directly from the head amplifier 19 via an analogue to digital converter to the microprocessor 23. A digital tape storage unit can then be used to programme the timing of the profile scans and the processing of the signals to provide the display required.

Following use, the air cylinder 15 is operated to withdraw the beam 5 and the gauges away from the roll surface. The air cylinder 15 has an interlock valve to ensure that if the supply to the probes fails, the complete beam will be withdrawn. In addition, mechanical limit switches are provided to ensure that the beam is withdrawn during roll changes even if the operator neglects to initiate this action.

In use of the gauge, the probe tip 3 is moved relative to the roll surface under inspection with variation in roll profile (e.g. profile wear or defects). Movement of the probe is transmitted through the rod 4 to the transducer core to which the rod is connected.

The gauge described above is capable of detecting various profile parameters, these including the initial ground profile of the work roll, the degree of roll bending under load, thermal crown and surface wear. The signal processing equipment discriminates between the respective transducer signals to give a clear measurement of the surface profile across the full width of the roll.

## Claims

1. Apparatus for measuring or detecting changes in the surface profile of a workpiece (12), the apparatus comprising a probe mounted for movement relative to the workpiece surface and including an open tip (3) through which gas under pressure can be discharged to form a film or cushion between the probe tip and the adjacent surface of the workpiece, the probe being connected at its end remote from the workpiece (12) surface to the core of a displacement transducer coupled to signal processing equipment, the apparatus being characterised in that one pad or more pads (17) is/are provided which, in use of the apparatus, contact(s) the workpiece (12) surface to provide a repeatable datum position for locating the probe tip (3) relative to the workpiece surface.

2. Apparatus as claimed in Claim 1 characterised in that the probe comprises a tubular member connected via a rod (4) to the core of the transducer and formed at its end remote from the transducer with an enlarged recess (11).

3. Apparatus as claimed in Claim 2 characterised in that the assembly of the transducer and probe is supported by a hollow structure (5) whose interior is connected to a source of gas under pressure and communicates with the open tip (3) of the probe to place the same in communication with the aforesaid source.

4. Apparatus as claimed in Claim 3 characterised in that the hollow structure (5) supports a plurality of transducer-probe assemblies and wherein the hollow structure is movable towards and away from the surface of the workpiece (12) by means of a pivotably mounted frame (13—16).

5. Apparatus as claimed in any one of Claims 1 to 4 characterised in that a plurality of probes are supported within a hollow beam movable towards and away from the workpiece.

## Patentansprüche

1. Vorrichtung zur Messung oder Feststellung von Unterschieden in der Oberflächengestalt eines Werkstückes (12), mit einem Fühler, der relativ zu der Werkstückoberfläche bewegbar ist und eine offene Fühlerspitze (3) hat, aus der Gas unter Druck herauszulassen ist, so daß es eineh Film oder ein Kissen zwischen der Fühlerspitze und der benachbarten Werkstückoberfläche bildet, und deren Fühler mit seinem Ende, das von der Werkstückoberfläche abgelegen ist, mit einem Anker eines Weggebers verbunden ist, der mit einem Signalverarbeitungsgerät verbunden ist, dadurch gekennzeichnet, daß ein oder mehrere Stützlager (17) vorgesehen sind, die beim Gebrauch der Vorrichtung die Werkstückoberfläche (12) berühren, um eine wiederholbare Bezugslage zur Ortung der Fühlerspitze (3) bezüglich der Werkstückoberfläche zu erbringen.

2. Vorrichtung hach Anspruch 1, dadurch gekennzeichnet, daß der Fühler aus einem röhrenförmigen Gegenstand besteht, der durch einen Stift (4) mit dem Anker des Weggebers verbunden ist und der an seinem Ende, das entgegengesetzt zum Weggeber liegt, zu einem vergrößerten Raum (11) ausgestaltet ist.

3. Vorrichtung nach Anspruch 2, dadurch gekennzeichnet, daß die Anordnung des Weggebers und des Fühlers in einem Hohlkörper (5) gehalten ist, dessen Inneres an eine Gasquelle unter Druck angeschlossen ist und mit der offenen Fühlerspitze (3) in Verbindung steht, so daß diese mit der Gasquelle verbunden ist.

4. Vorrichtung nach Anspruch 3, dadurch gekennzeichnet, daß der Hohlkörper (5) eine Vielzahl von Weggeber-Fühler Vorrichtungen trägt, wobei der Hohlkörper mittels eines schwenkbaren Rahmens (13—16) in Richtung zu und von der Werkstückoberfläche (12) weg beweglich gehalten ist.

5. Vorrichtung nach einem der Ansprüche 1 bis 4, dadurch gekennzeichnet, daß eine Vielzahl von Fühlern in einem hohlen Balken auf das Werkstück zu und von diesem weg beweglich gehalten ist.

## Revendications

1. Appareil pour mesurer ou détecter des variations dans le profil de la surface d'une pièce à usiner (12), comprenant une sonde montée de façon à pouvoir se déplacer relativement à la surface de la pièce à usiner et comprenant une pointe (3) ouverte d'où peut sortir un gaz sous pression pour former un film ou coussin entre la pointe de la sonde et la surface adjacente de la pièce à usiner, la sonde étant connectée à son extrémité éloignée de la surface de la pièce à usiner (12) au noyau d'un capteur de déplacement couplé à un équipement de traitement de signaux, caractérisé en ce qu'un ou plusieurs patins (17) est/sont prévu(s) qui, lors de l'utilisation de l'appareil, contacte(nt) la surface de la pièce à usiner (12) pour fournir une donnée de position reproductible pour localiser la pointe (3) de la sonde par rapport à la surface de la pièce à usiner.

2. Appareil selon la revendication 1, caractérisé en ce que la sonde comprend un élément tubulaire connecté au moyen d'une tige (4) au noyau du capteur et pourvu à son extrémité éloignée du capteur d'un creux (11) élargi.

3. Appareil selon la revendication 2, caractérisé en ce que l'ensemble formé par le capteur et la sonde est porté par une structure creuse (5) dont l'intérieur est connecté à une source de gaz sous pression et communique avec la pointe (3) ouverte de la sonde pour la mettre en communication avec la source prédite.

4. Appareil selon la revendication 3, caractérisé en ce que la structure creuse (5) porte une pluralité d'ensembles capteur-sonde et dans lequel la structure creuse peut être déplacée vers et s'éloigner de la surface de la pièce à usiner (12) au moyen d'un cadre (13—16) pivotant de façon à pouvoir pivoter.

5. Appareil selon l'une quelconque des revendications 1 à 4, caractérisé en ce que la pluralité de sondes est portée dans une potence creuse pouvant se déplacer en direction et s'éloigner de la pièce à usiner.

# FIG.1.

EP 0 127 263 B1

FIG.2.

EP 0 127 263 B1

## FIG.3.

FIG. 4.

EP 0 127 263 B1